# EUROPEAN PATENT SPECIFICATION

(11) **EP 0 980 136 B1**
(45) Date of publication and mention of the grant of the patent: **13.09.2006**
(21) Application number: 99115134.1
(22) Date of filing: 11.08.1999
(51) Int. Cl.: H02P 9/02, H02K 9/19, H02J 7/14

(54) **AC generator and vehicle using the same**
Wechselstromgenerator und diesen verwendendes Fahrzeug
Alternateur et véhicule utilisant celui-ci

(30) Priority: 12.08.1998 JP 22784198
(43) Date of publication of application: 16.02.2000
(73) Proprietor: Hitachi, Ltd., Tokyo (JP)
(72) Inventor: Kanazawa, Hiroshi, Hitachiota-shi, Ibaraki 313-0012 (JP); Tahara, Kazuo, Hitachi-shi, Ibaraki 316-0032 (JP); Honda, Yoshiaki, Hitachinaka-shi, Ibaraki 312-0052 (JP); Takano, Masami, Hitachinaka-shi, Ibaraki 312-0063 (JP); Innami, Toshiyuki, Tsuchiura-shi, Ibaraki 300-0045 (JP); Suzuki, Osamu, Niihari-gun, Ibaraki 315-0055 (JP)
(74) Representative: Beetz & Partner

(56) References cited:
- US-A- 4 470 003
- US-A- 4 538 925
- US-A- 4 686 446
- US-A- 5 198 744
- PATENT ABSTRACTS OF JAPAN vol. 015, no. 428 (E-1128), 30 October 1991 (1991-10-30) & JP 03 178540 A (MITSUBISHI ELECTRIC CORP), 2 August 1991 (1991-08-02)

## Description

### BACKGROUND OF THE INVENTION

Present invention relates to an AC generator and a vehicle using said AC generator, and especially relates to the AC generator having an abnormality detection system for detecting an abnormality of a cooling mechanism of said AC generator.

In late years, as various components in addition to an engine of a vehicle are controlled by an electronic circuit and many new deployment components such as a navigation system are installed in the vehicle, output current of an AC generator for vehicle is needed to increase.

As a result, there arises a tendency to increase a heating capacity of the AC generator for the vehicle.

However, space for installing the AC generator mounted on an engine body for the vehicle becomes small too and cooling effect by draft tends not to be enough.

As this solution, a technology to cool the AC generator for the vehicle by using a coolant for an engine is proposed.

As such an example, there is indicated a Japanese Patent Laid-open No. 3-178540 bulletin.

In an AC generator having a cooling construction by air shown in this bulletin, a coolant for cooling an engine is used as a cooling means to cool diodes of the semiconductor and a regulator part.

However, in the above prior art, it does not mention about a control method of the regulator, and problems may be left as that the coolant temperature rises because the coolant path becomes narrow and the AC generator is not protected from the overheat of the engine.

JP 03178540 discloses an AC generator for a vehicle. It comprises a coolant circulation device to which the heat sink of a voltage regulator is contact-bonded.

US 4,686,446 discloses a power generation control apparatus for an alternating current generator. It comprises a switching device operable in response to the detection of an operating state temperature to control the field current of the generator independently of another switching device performing a field current control based on the output voltage of the generator.

US 4,538,925 discloses a thermal power measuring device. It measures thermal power by means of temperature differences between an inlet and an outlet of a line convene a medium through the measuring device. One ore several pairs of sensors are provided.

US 4,470,003 discloses a voltage regulator with temperature responsive circuitry for reducing alternator output current. The power output from an alternator type generator is reduced by lowering the field current duty cycle when the ambient temperature at the voltage regulator exceeds a predetermined critical value for preventing damage to the alternator.

US 5,198,755 discloses an apparatus and method for controlling the output power of a generator to maintain generated temperature below an allowed limiting value. A generator can be controlled by a voltage regulator which adjusts an exciting current in the exciting winding and a temperature measurement device in a predetermined location in the generator.

### SUMMARY OF THE INVENTION

Object of the present invention is to prevent temperature rise of an AC generator when there arise any abnormality in the cooling system, and to improve security of the power generation control system of the AC generator.

As set out in full in the characterising portion of claim 1, the invention solves this problem by applying the following measures: the coolant channel is provided in the stator and has coolant from a cooling system of the vehicles engine flowing therein; the temperature sensor comprises an inlet port side temperature sensor and an outlet port side temperature sensor, and an electronic circuit is provided for controlling an electric current generated by said AC generator according to a temperature detected by said temperature sensor such that when the difference between the temperatures measured by the inlet port side temperature sensor and the outlet port side temperature sensor is more than a predetermined value, the current generated by the generator is limited by controlling the current supplied to the field winding, and when the temperature detected by said outlet port side temperature sensor exceeds an allowable temperature previously determined, controls said AC generator to stop to generate the electric current.

### BRIEF DESCRIPTION OF THE DRAWINGS

Fig. 1 is a block-diagram to show a total construction of the vehicle having the cooling system for cooling the AC generator.
FIG. 2 is a correlation view to explain control of electric current generated by the AC generator according to the coolant temperature detected by a coolant temperature detection sensor.
FIG. 3 is a circuit-diagram for realizing an operation shown in FIG. 2.
FIG. 4 is a flow-chart of the operation shown in FIG. 2.
FIG. 5 is a longitudinal sectional view which shows a construction of the AC generator for the vehicle.
FIG. 6 is an other longitudinal sectional view which shows a construction of the AC generator for the vehicle.
FIG. 7 is a time correlation view to show a time change of the coolant temperature in the outlet port.

### DETAILED DESCRIPTION OF THE PREFERRED EMBODIMENT

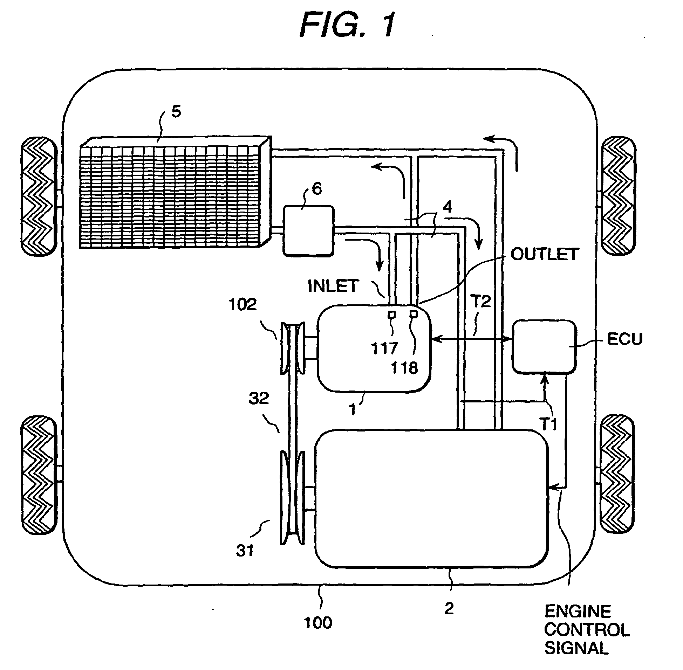

First embodiment of the present invention will be explained referring to Figs. 1 to 2 as follows.

Figure 1 is a block-diagram to show a construction of the vehicle having the cooling system to cool the AC generator 1 installed in an engine room of a vehicle 100.

In Fig. 1, an AC generator 1 for vehicle 100 is connected to a pulley 102 arranged on an axis top of the AC generator 1 for the vehicle and to a pulley 31 arranged on the shaft top of the engine 2 through a belt 32.

This pulley 102 and pulley 31 makes the speed of the AC generator 1 for vehicle increased two to three times.

Moreover, the cooling of the AC generator 1 for the vehicle is performed by connecting two radiator hoses 4 to radiator 5 of the vehicle in order to perform heat exchange and arranging a coolant pump 6 to cycle the coolant through the engine on an exit side of the radiator 5.

This coolant pump 6 is connected normally to the pulley 31 of the engine 2 which is not shown in the figure, and suitable quantity of coolant in proportion to a revolution speed of engine 2 may be sent.

Moreover, after the coolant is flown out from this radiator 5 through the coolant pump 6, it is used for cooling of the engine 2. Then the coolant which is flown out from the engine 2 is sent to the radiator hose 4 in an outlet-port side of the AC generator 1 for the vehicle.

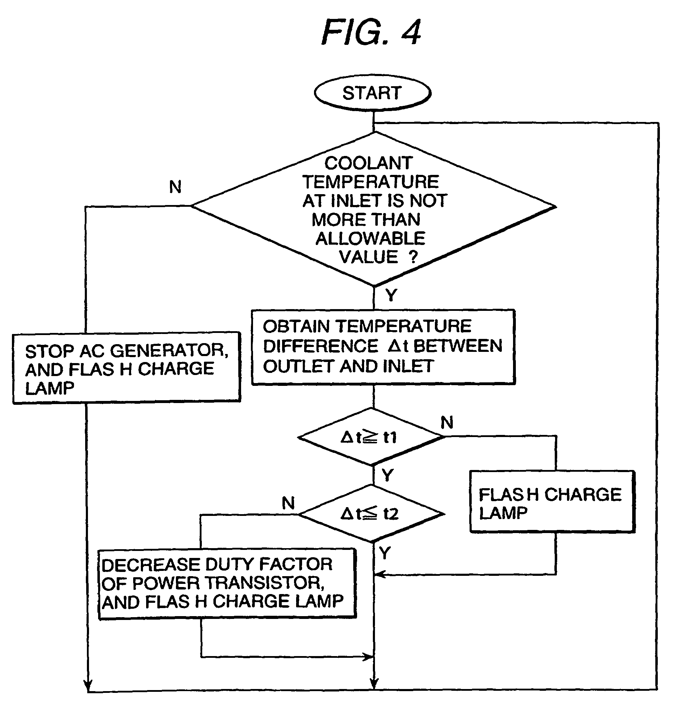

In the AC generator for the vehicle as stated above, an inlet-port side coolant temperature detection sensor 117 is provided in an inlet-port side of the radiator hose 4, and an outlet-port side coolant temperature detection sensor 118 is provided in an outlet-port side of the radiator hose 4, thereby temperatures of the coolant are respectively detected, and detected values are inputted to ECU as an engine control unit so as to be used to control an electric current generated by the AC generator 1 for the vehicle as shown by Fig. 4 to mention later.

In this embodiment, as the coolant of the AC generator is commonly used as the coolant of the engine, the temperature of the coolant may be provided by the ECU which detects the temperature of the coolant in the engine side in stead of temperature detected by a sensor 117, 118 provided on an inlet or outlet of the AC generator. Thereby, there is no need to provide the sensor in double, and the number of vehicle components may be improved to be decreased. In this case, the temperature of the coolant of the AC generator may be replaced by that of the coolant in an inlet, outlet or both of the inlet and outlet of the engine. Moreover in this case, a terminal to receive a signal of the temperature from the ECU should be provided on the AC generator for the vehicle.

On the contrary, as the coolant of the AC generator is commonly used as that of the engine, the temperature signal of the coolant in the AC generator may be transmitted to ECU. In this case, the ECU receives the temperature signal of the coolant of the AC generator as the temperature signal of the coolant of the engine, thereby there is no need to provide the sensor in double and the number of vehicle components may be improved to be decreased in the same way.

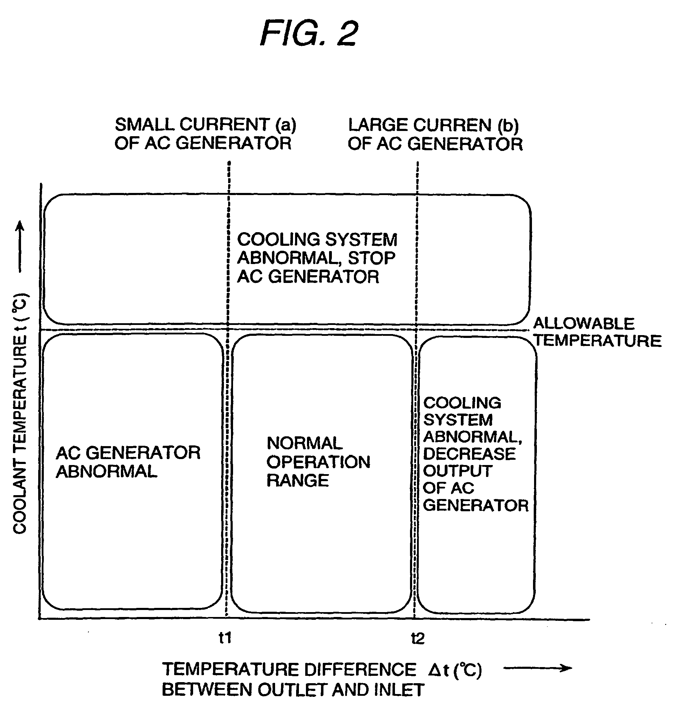

Fig. 2 is a correlation figure for explaining control of the electric current generated by the AC generator 1 according to the coolant temperature detected by the coolant temperature detection sensors.

A horizontal scale of Fig. 2 shows a difference between an outlet port temperature of the coolant flowing out from the AC generator 1 for the vehicle and an inlet port temperature of the coolant flowing in to the AC generator 1, and a vertical scale of Fig. 2 shows the outlet-port temperature of the coolant flowing out from the AC generator 1.

In Fig. 2, in a range of a usual using region, an upper limit of a temperature difference Δ t of the outlet port temperature of the coolant and the inlet port temperature of the coolant in a case that the electric current generated by the AC generator 1 is large, is determined as a mark t2 as shown in the figure.

Moreover, in a range of a usual using region, an upper limit of the temperature difference △ t of the outlet-port temperature of the coolant and the inlet-port temperature of the coolant in a case that the electric current is small, is determined as a mark t1 as shown in the figure.

In a range of a normal operation, the temperature difference Δ t of the outlet-port temperature of the coolant and the inlet-port temperature of the coolant works between t1 and t2.

In other words, a case that the temperature difference Δ t is less than t1 or more than t2, means to be out of the range of the normal operation, and it is estimated that there arises any fault.

For example, in the case that the temperature difference Δ t is less than t1, the electric current generated by the AC generator 1 is small and it is regarded as that an abnormality of the AC generator has arisen.

In a case that the temperature difference △ t is more than t2, it is regarded the needed coolant does not flow, and the electric current generated by the AC generator 1 is limited.

In order to inform this abnormality to the operator furthermore, for example, a charge lamp is flashed on and off so as to display the abnormality.

A vertical scale in Fig. 2 shows the coolant temperature in the outlet side, and an allowable temperature for it is set.

In a case that the coolant temperature in the outlet side is high, it is regarded a cooling power of the radiator 5 falls down, and it is estimated that overheat of the engine or a leak of the coolant of the radiator may happen.

Then, in order to avoid a trouble of the AC generator because of a cooling failure of the AC generator, the electric current generated by the AC generator 1 is controlled to be limited or the AC generator 1 is stopped not to generate the electric current.

Furthermore, in order to inform the abnormality to the operator, for example, a charge lamp is flashed on and off.

In this way, when the electric current generated by the AC generator 1 is limited , the charge lamp is flashed on and off, and when the electric current generated by the AC generator 1 is stopped, the charge lamp is turned on, thereby contents of the abnormality of the AC generator 1 are informed, and it is very convenient.

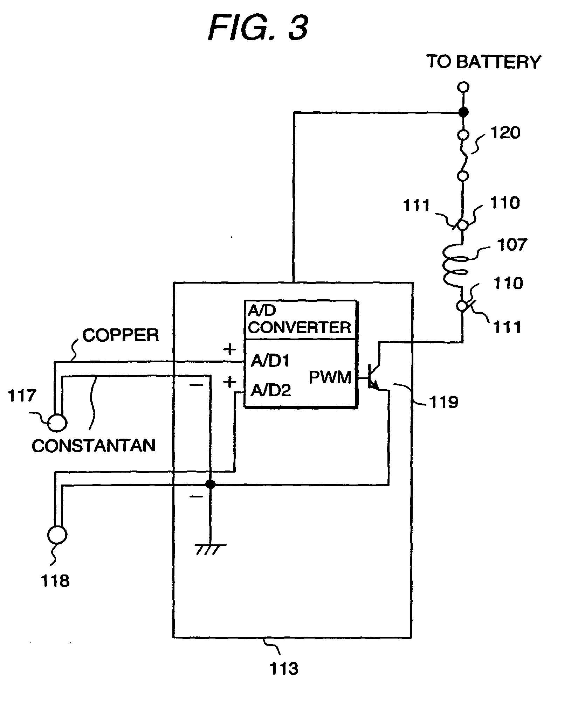

FIG. 3 is a circuit-diagram for realizing an operation shown in FIG. 2.

The sensor detects the temperature of the coolant within a temperature rage about from -40 °C to 140 °C, a thermocouple made of a copper and a constantan is used. In this case, the copper works as a plus electrode and the constantan works as a minus electrode.

These two sensors for detecting the temperature of the coolant are respectively connected to terminals A/D1, A/D2 of an A/D converter which is inputted an analog voltage from a control circuit provided in an IC regulator for controlling the field winding current as explained above.

In FIG. 3, the sensor 117 for detecting the temperature of the coolant of the AC generator arranged in an inlet-side is connected to the terminal A/D1, and the sensor 118 arranged in an outlet-side is connected to the terminal A/D2. The output of the control circuit is connected to a base electrode of a power transistor 119. Between a collector electrode of the power transistor 119 and a battery, a temperature fuse 120, a brush 111, a slip ring 110, a field winding 107, slip ring 110 and a brush 111 are connected in series.

The control circuit stated above is constructed with a micro-computer etc. and an output port connected to the base electrode of the power transistor 119 uses a PWM port to be capable of controlling a duty factor.

The outputs of the thermocouples are converted to a digital signals by the an A/D converter so as to obtain a temperature difference of the outputs. The duty factor of the power transistor 119 is controlled based on the temperature difference and controls the current of the field winding so as to control the output of the AC generator. For example when the duty factor is 100 % and the maximum current of the field winding is flown, if the temperature difference detected by the temperature sensor is more than the allowable value, the duty factor is controlled to be smaller, for example to be about 80 %.

However, if it is impossible to control normally because of abnormality of the temperature sensor or the malfunction, temperature of the AC generator may become extremely high. Then, the temperature fuse 120 is arranged on a part where a time constant of the temperature rising is small, the AC generator is controlled to stop the power generation if the time constant of the temperature rising exceeds the allowable value.

Concretely the temperature fuse 120 is arranged on the cooling fin through thin electrical insulator and when the temperature fuse is melted, the AC generatore is controlled to stop by controlling not to flow the electric current of the field winding.

In FIG. 4, the above operation is shown with a flow-chart as follows.

At first, the temperature of the coolant of the AC generator arranged in the inlet-side is detected and when it is not more than the allowable temperature, the temperature difference is calculated. When the temperature difference is normal, the field currentis controlled normally, however when it is not more than the allowable value, the charge lamp is controlled to flash so as to inform the abnormal to the operator.

When the temperature is more than the allowable temperature, the coolant is judged to be insufficient and the electric power generation is controlled to be decreased and the simultaneously the charge lamp is controlled to flash in the same way so as to inform the abnormal to the operator.

In this case, the decreasing rate of the electric power generation is previously determined to be controlled according to the temperature difference or to be controlled based on a constant rate of about 50% to 80%. In such a case too, when the temperature becomes more than the allowable temperature, the electric power generation is controlled to stop for the purpose of self-defense for the AC generator system.

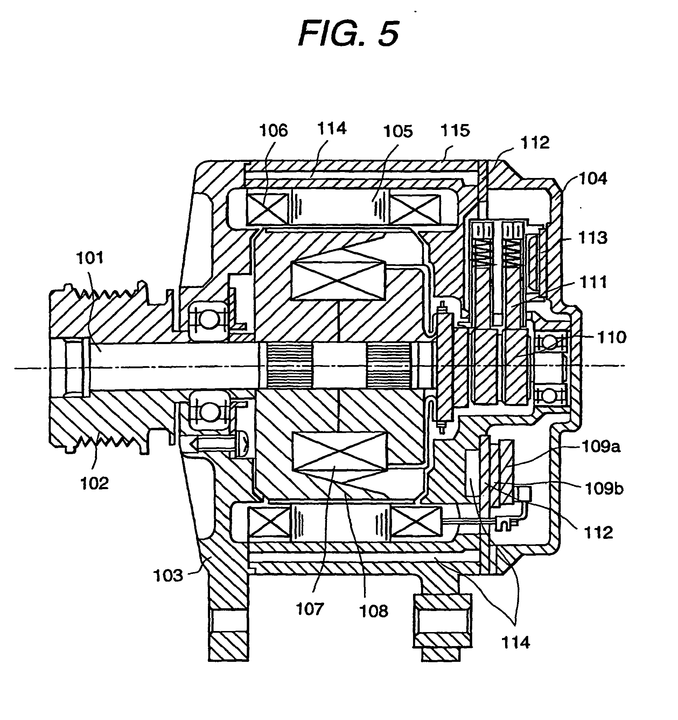

In the next, a second embodiment of the present invention will be explained referring to Figs. 5 to 7 as follows.

Fig. 5 is a longitudinal sectional view showing a construction of the AC generator 1 for the vehicle.

The AC generator 1 for the vehicle has two brackets of a front bracket 103 arranged in a pulley 102 side and a rear bracket 104 arranged in an opposing side of the pulley 102
In to a central portion of both of the brackets, a shaft 101 is supported through a bearing.

The pulley 102 is installed on one end of the shaft 101 and a slip ring 110 is installed to other end of the shaft 101.
Pulley 102 is connected to the pulley 31 arranged to the output shaft of the engine 2 through a belt 32 shown in Fig. 1, and the shaft 101 is rotated by the engine 2.

A brush 111 is installed on the slip ring 110 in slidable, and electric power is supplied in a field winding 107 mentioned later from the brush 111.

Moreover a rotator is installed to a central part of the shaft 101.

On a periphery part of the rotator, a claw shape magnetic pole 108 having a configuration of a claw is arranged.

Moreover, on a central part of rotator, a field winding 107 is wound up, and said law shape magnetic pole 108 is magnetized by flowing a direct current from a slip ring 110 into the field winding 107.

Between the front bracket 103 of the pulley 102 side and the rear bracket 104 on an opposite side of the pulley 102, a housing 115 built in a stator core 105 is arranged, and the internal circumference side of this stator core 105 is separated from the claw shape magnetic pole 108 of the rotator keeping a very small interval.

This interval is decided beforehand based on a relationship necessary from a mechanical characteristic and is set up in around 0.4 mm generally.

A teeth and a slot are arranged with the stator core 105 and in the slot of this stator core 105 equivalent to a concavity, a stator winding 106 is wound up with three phase, and when the claw shape magnetic pole 108 turns so as to be magnetized, an induced voltage of three phase occurs in the stator winding 106.

In the inside of the rear bracket 104, a diodes plus fin 109a and a diode minus fin 109b constituting a rectifier circuit are fixed in a rear plate 112 for shutting a coolant channel 114 tightly.

Moreover an integrated circuit regulator 113 to adjust power generation voltage is fixed to contact with the rear bracket 104.

In Fig. 1 furthermore, near the inlet-port and outlet-port of the radiator hose 4, inlet-port side coolant temperature detection sensor 117 and outlet-port side coolant temperature detection sensor 118 are shown.

However, one coolant temperature detection sensor 116 may be set up to contact with the rear bracket 104 with the integrated circuit regulator 113 so that the temperature of the coolant flowing through a part near to the outlet-port side of the coolant channel 114 may be detected.

The diodes plus fin 109a is connected to a plus electrode of the battery which is not illustrated in the figure, and the diodes minus fin 109b becomes an electric potential same as AC generator body and is electrically connected to a minus terminal side of the battery which is not illustrated in the figure.

These diodes fullwave-rectify an AC induced voltage generated in the stator winding 106 so as to convert it into DC voltage.

The integrated circuit regulator 113 controls the field winding current so that the DC voltage rectified with the diodes in order to charge the battery, keeps a constant voltage about around 14.3 V.

In the AC generator 1 for the vehicle constituted as above, when the pulley 102 turns by being driven by the engine 2, the shaft 101 turns same with the slip ring 110 and the rotator, the direct current is flown from the brush 111 into the field winding 107 disposed in the rotator, and the field winding 107 works to constitute a N pole and a S pole in each magnetic pole of the claw shape magnetic pole 108.

Magnetic flux generated by this field winding 107 forms a magnetic circuit wherein the magnetic flux which goes out from the claw part of the claw shape magnetic pole of the N pole, passes through the stator core 105 and returns to the claw part of the claw shape magnetic pole of the S pole.

As the magnetic flux of this magnetic circuit crosses the stator winding 106, the induced voltage of the three phase is generated in the stator winding 106.

An induced voltage of this 3 phase is fullwave-rectified to be converted into DC voltage by diodes group arranged in the diodes plus fin 109a and the minus fin 109b.

Rectified DC voltage is adjusted to keep a constant voltage of about around 14.3 V by the integrated circuit regulator 113.

Further, when permanent magnets may be arranged in a direction where the same poles are opposite between the claw magnetic poles, because it is possible to let the current generated by the AC generator increased.

A method for cooling heat generated by copper loss in the stator winding 106 will be explained in the next.

The stator core 105 that the stator winding 106 is arranged, is fixed by a shrinkage fit method so as to contact with the housing 115, is has a construction which is easy to introduce the generation of heat by copper loss to occur with stator winding 106 into housing 115.

Moreover in order to improve radiation of heat of the stator winding 106, the inside of the housing 115 may come in contact with the stator winding 106, or a radiation pass of the heat may be provided with a resin having a high thermal conduction.

The housing 115 is provided plural holes thereon in a shaft direction, and a coolant channel is constituted in a zigzag state with the front bracket 103 and the rear plate 112. The coolant is constituted to flow the coolant channel of the zigzag state in the periphery side of the stator core 105 , and all of the peripheral of the stator core 105 can be cooled.

Moreover, the heat generated by the copper loss in the field winding 107 in the rotator interior may be radiated to a face contacted with the surface of the rotator in a shaft direction thereof by keeping a very small gap.

In this way, the surface and the periphery in the shaft direction of the rotator are arranged to contact with the coolant channel, thereby total cooling of the rotator is promoted.

Moreover, it is not illustrated in the figure, however eight coolant channels 114 are provided to be arranged with the housing 115, the coolant flows so as to enter from the rear side and is turned down with the front bracket 103, and then the coolant is flown to the the front side again so as to be turned down in the rear side again, thereby the coolant makes four round trips and flow out from the rear side.

In this way as even number of the coolant channel 114 is provided, pipe laying of the coolant supply and drainage can be provided for the same direction and handlings of the radiator hose becomes easy.

Moreover, the hose joint of the coolant supply and drainage is arranged in an opposing side to the pulley, and possibility of the danger to be got by the belt can be small.

The coolant temperature detection sensor 116 installed in the rear bracket 104 mentioned above, detects the heat through a thermal transfer of the coolant and by a thermal conduction of the rear plate 112 and the rear bracket 104

In strict meaning, as there is a heating value evaded during thermal conduction, the detected value may be revised.

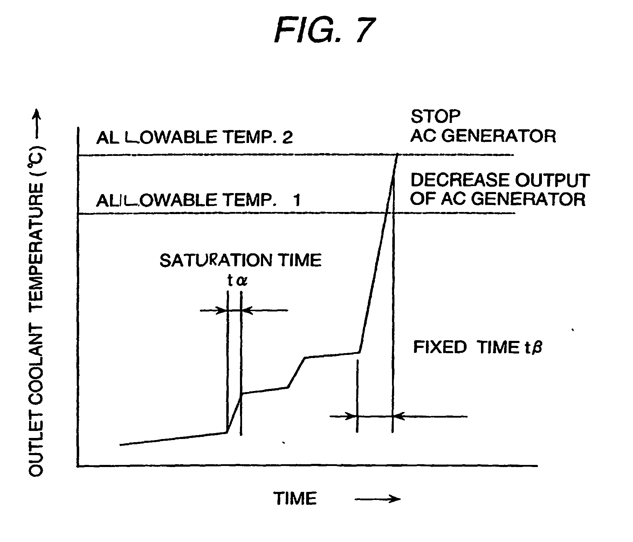

The value that is detected by the coolant temperature detection sensor 116 is used for controlling the electric current generated by the AC generator as shown in Fig. 7.

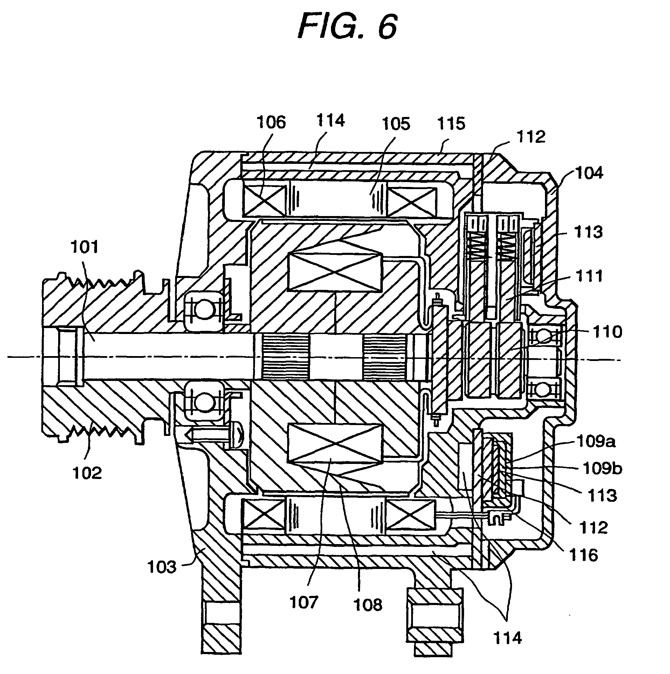

Fig. 6 is a variation of the second embodiment of the present invention shown Fig. 5, and shows a longitudinal sectional view showing the construction of the AC generator 1 for the vehicle in the same way as Fig. 5.

In this embodiment shown in Fig. 5, the integrated circuit regulator 113 and the coolant temperature detection sensor 116 to adjust power generation voltage are arranged on the rear plate 112 to block up the coolant channel 114 for the coolant in the construction shown in Fig. 5.

This coolant channel 114 is selected to be near to the outpet-port side instead of inlet-port side so as to detect the temperature of the coolant in the outlet-port side is to be detected.

The other construction in Fig. 6 is the same as all in Fig. 5 and detailed description is omitted.

According to the construction shown in Fig. 6, the heat radiated from the integrated circuit regulator 113 is directly transmitted to the coolant through the rear plate 112 and cooling effect becomes higher than that shown in Fig. 5.

Moreover the coolant temperature detection sensor 116 detects the temperature of the coolant through the thick rear plate 112, and a temperature near to a real coolant temperature can be detected.

Further, when the integrated circuit regulator 113 and the coolant temperature detection sensor 116 are installed on a place as shown in Fig. 5, the coolant temperature detection sensor 116 should be installed apart from the integrated circuit regulator 113, in order to detect the coolant temperature in acculate by avoiding an affection of the heat generated by the integrated circuit regulator 113.

However, as shown in Fig. 6, the coolant temperature detection sensor 116 is arranged so that a detection side of the coolant temperature detection sensor 116 faces to the rear plate 112 contacting with the coolant, thereby heat affection to the integrated circuit regulator 113 becomes small, moreover, the coolant temperature detection sensor 116 may be built in the integrated circuit regulator 113.

A time correlation figure to show a changing of the coolant temperature at the outlet port of the coolant channel 114 is shown in Fig. 7.

In the case of the first embodiment of the present invention shown in Fig. 2, the electric current generated by the AC generator is controlled by detecting the temperature difference between the outlet port and the inlet port of the coolant and the outlet port temperature, however in the case of the second embodiment of the present invention shown in Fig. 7, the electric current generated by the AC generator is controlled by detecting the outlet port temperature only.

The coolant temperature at the outlet port side of the AC generator 1 for the vehicle, is detected with the coolant temperature detection sensor 116 shown in Fig. 5 or Fig. 6.

The coolant temperature of the outlet port side goes up according to the power generation, and abnormality is detected by setting up a following judgment condition beforehand.

As the heating-value increases normally when the power generation current increases, the coolant temperature of the coolant goes up.

If the coolant circulates normally, time constant while the coolant temperature is going up is several minutes generally.

When the cooling power is insufficient, rise of the coolant temperature becomes steep as shown with the coolant temperature at the outlet port side in a saturation time tα in Fig. 5, an event to exceed a fixed time tβ in which the coolant temperature exceeds an allowable temperature 1, happens.

In this case, it is estimated that an abnormality of the coolant pump 6, coolant leak of the radiator 5, choking of the internal coolant channel 114 of the AC generator 1 for the vehicle etc. has happened, and the power generation control system controls the AC generator so that the power generation current is limited or the power generation is stopped.

As shown in Fig. 7, these controls are performed by seting two allowable temperatures.

When the outlet side temperature exceeds an allowable temperature 1, the electric current generated by the AC generator is limited.

In this case, the abnormality is displayed for operator, by making the charge lamp flashed on and off.

When the outlet side temperature exceeds an allowable temperature 2, the power generation by the AC generator is stopped, and the abnormality is displayed for operator by turning the charge lamp on.

In this way if the generated electric current is controlled according to the temperature at the outlet side for the coolant, damage of the AC generator 1 may be prevented.

Although it is not shown in the figure, by informing to the operator that a charge system enteres into a control mode in the abnormality or by providing a means that the operator can judge in any kind of conditions, without utilizing the lighting of the charge lamp, it becomes possible for the operator to move the vehicle to a repair shop.

For example, contents of the abnormal mode of a charge system are capable to be indicated on a display board with a marking or a word.

In the embodiment stated above further, although the cooling-system of the engine 2 is utilized in cooling of the AC generator 1, an exclusive cooling-system for the AC generator 1 may be provided.

By adopting a construction of the present invention like an above-mentioned embodiment, the electric current generated by the AC generator is controlled by detecting the abnormality of the cooling system from a temperature rising state of the coolant for cooling the AC generator for the vehicle or from a temperature difference of the coolant between the inlet port and the outlet port of the coolant cannel, thereby heat-up of the AC generator for the vehicle may be prevented.

Moreover, by providing a means to inform the operator that it is in such a control mode, it becomes possible to repair it early, thereby a sudden stopping on the road or any accident may be prevented.

## Claims

1. An AC generator for a vehicle (1) having
a stator with a stator winding (106),
a rotor with a field winding (107) magnetized by a supplied electric current,
a coolant channel (114) having coolant flowing therein and having an inlet port and an outlet port, and
a temperature sensor (117, 118) for detecting the temperature of said coolant,
**characterized in that**
the coolant channel (114) is provided in the stator and has coolant from a cooling system of the vehicles engine flowing therein ,
the temperature sensor (117, 118) comprises an inlet port side temperature sensor (117) and an outlet port side temperature sensor (118), and
an electronic circuit (113) is provided for controlling an electric current generated by said AC generator according to a temperature detected by said temperature sensor such that
when the difference between the temperatures measured by the inlet port side temperature sensor (117) and the outlet port side temperature sensor (118) is more than a predetermined value (t2), the current generated by the generator is limited by controlling the current supplied to the field winding, and
when the temperature detected by said outlet port side temperature sensor (118) exceeds an allowable temperature previously determined, controls said AC generator to stop to generate the electric current.

2. The AC generator of claim 1, comprising a terminal for sending a temperature signal to an electronic control unit of an engine.

3. An AC generator (1) according to claim 1,
wherein the electronic circuit (113) controls the electric current generated by said AC generator according to a temperature detected by said temperature sensor (118) at the outlet port such that when the temperature of the coolant at the outlet port is more than a first predetermined value lower than said allowable temperature, the current generated by the generator is limited by controlling the current supplied to the field winding.

4. The generator of claim 3, comprising a temperature sensor (116, 117, 118) for measuring the coolant temperature.

5. The generator of claim 3, comprising a terminal for receiving the coolant temperature from an engine

6. The AC generator of claim 3, comprising
a housing (115),
a rear bracket (104),
a plate (112) for shutting the coolant channel (114),
an IC regulator (113) for controlling the field winding current,
wherein the temperature sensor is in contact with the rear bracket (104) and with the IC regulator (113) so that the temperature of the coolant flowing through a part near to the outlet-port side of the coolant channel (114) can be detected.

7. The AC generator of claim 4, comprising a terminal for sending a temperature signal to an electronic control unit of an engine.

## Patentansprüche

1. Wechselstromgenerator für ein Fahrzeug (1) mit
einem Stator mit einer Statorwicklung (106),
einem Rotor mit einer Feldwicklung (107), die durch einen eingespeisten Strom magnetisiert wird,
einem Kühlmittelkanal (114) mit einem darin fließenden Kühlmittel, der eine Einlassöffnung und eine Auslassöffnung hat und
einem Temperatursensor (117, 118) zur Messung der Temperatur des Kühlmittels,
**dadurch gekennzeichnet, dass**
der Kühlmittelkanal (114) im Stator vorgesehen ist und Kühlmittel eines Kühlsystem des Fahrzeugmotors darin fließt,
der Temperatursensor (117, 118) einen einlassöffnungseitigen Temperatursensor (117) und einen auslassöffnungseitigen Temperatursensor (118) aufweist und
ein elektronischer Schaltkreis (113) zur Steuerung eines elektrischen Stroms vorgesehen ist, der durch den Wechselstromgenerator gemäß einer vom Temperatursensor gemessenen Temperatur so erzeugt wird, dass,
wenn der Unterschied zwischen den durch den einlassöffnungsseitigen Temperatursensor (117) und den auslassöffnungsseitigen Temperatursensor (118) gemessenen Temperaturen größer als ein bestimmter Wert (t2) ist, der von dem Generator erzeugte Strom begrenzt wird, indem der der Feldwicklung zugeführte Strom gesteuert wird, und
wenn die von dem auslassöffnungsseitigen Temperatursensor (118) gemessene Temperatur eine vorher festgelegte erlaubte Temperatur überschreitet, der elektronische Schaltkreis den Wechselstromgenerator steuert, um die Erzeugung des elektrischen Stroms zu stoppen.

2. Der Wechselstromgenerator nach Anspruch 1, der ein Terminal aufweist, mit dem ein Temperatursignal an eine elektronische Steuereinheit eines Motors gesendet wird.

3. Ein Wechselstromgenerator nach Anspruch 1, wobei der elektronische Schaltkreis (113) den vom Wechselstromgenerator erzeugten elektrischen Strom steuert und zwar gemäß einer Temperatur, die durch den Temperatursensor (118) an der Auslassöffnung gemessen wird, so dass, wenn die Temperatur des Kühlmittels an der Auslassöffnung höher ist als ein erster vorbestimmter Wert, der niedriger ist als die erlaubte Temperatur, der von dem Generator erzeugte Strom durch Steuerung des der Feldwicklung zugeführten Stroms begrenzt wird.

4. Der Generator nach Anspruch 3, der einen Temperatursensor (116, 117, 118) zur Messung der Kühlmitteltemperatur auf weist.

5. Der Generator nach Anspruch 3, der ein Terminal zur Aufnahme der Kühlmitteltemperatur von einer Motorsteuerungseinheit aufweist.

6. Der Wechselstromgenerator nach Anspruch 3, mit
einem Gehäuse (115),
einer rückwärtigen Halterung (104),
einer Platte (112) zum Schließen des Kühlmittelkanals (114), einem Regler (113) eines integrierten Schaltkreises zum Steuern des Feldwicklungsstroms,
wobei der Temperatursensor mit der rückwärtigen Halterung (104) und mit dem Regler (113) des integrierten Schaltkreis in Kontakt ist, so dass die Temperatur des Kühlmittels, das durch einen Teil nahe der Auslassöffnungsseite des Kühlmittelkanals (114) fließt, ermittelt werden kann.

7. Der Wechselstromgenerator nach Anspruch 4, der ein Terminal aufweist, mit dem ein Temperatursignal an eine elektronische Steuereinheit eines Motors gesendet wird.

## Revendications

1. Un alternateur de véhicule (1) possédant
un stator avec un enroulement de stator (106),
un rotor avec un enroulement d'excitation (107) magnétisé par un courant électrique fourni,
un canal de liquide de refroidissement (114) ayant un liquide de refroidissement circulant à l'intérieur et possédant un orifice d'entrée et un orifice de sortie, et
une sonde de température (117, 118) permettant de détecter la température dudit liquide de refroidissement,
**caractérisé en ce que**
le canal de liquide de refroidissement (114) est fourni dans le stator et possède un liquide de refroidissement provenant d'un système de refroidissement du moteur du véhicule qui circule à l'intérieur du canal,
la sonde de température (117, 118) comprend une sonde de température du côté de l'orifice d'entrée (117) et une sonde de température du côté de l'orifice de sortie (118), et
un circuit électronique (113) est fourni pour
contrôler un courant électrique produit par ledit alternateur selon une température détectée par ladite sonde de température de telle sorte que
quand la différence entre les températures mesurées par la sonde de température du côté de l'orifice d'entrée (117) et la sonde de température du côté de l'orifice de sortie (118) est supérieure à une valeur prédéterminée (t2), le courant produit par l'alternateur est limité en contrôlant le courant fourni à l'enroulement d'excitation, et
quand la température détectée par ladite sonde de température du côté de l'orifice de sortie (118) dépasse une température autorisée déterminée auparavant, il contrôle ledit alternateur pour arrêter de produire le courant électrique.

2. L'alternateur de la revendication 1, comprenant une borne permettant d'envoyer un signal de température à une unité de contrôle électronique d'un moteur.

3. Un alternateur (1) selon la revendication 1,
dans lequel le circuit électronique (113) contrôle le courant électrique produit par ledit alternateur selon une température détectée par ladite sonde de température (118) à l'orifice de sortie de telle sorte que, quand la température du liquide de refroidissement à l'orifice de sortie est supérieure à une première valeur prédéterminée inférieure à ladite température autorisée, le courant produit par l'alternateur est limité en contrôlant le courant fourni à l'enroulement d'excitation.

4. L'alternateur de la revendication 3, comprenant une sonde de température (116, 117, 118) permettant de mesurer la température du liquide de refroidissement.

5. L'alternateur de la revendication 3, comprenant une borne permettant de recevoir la température du liquide de refroidissement d'une unité de contrôle du moteur.

6. L'alternateur de la revendication 3, comprenant
un boîtier (115),
un support arrière (104),
une plaque (112) permettant de fermer le canal de liquide de refroidissement (114),
un régulateur à circuit intégré (113) permettant de contrôler le courant de l'enroulement d'excitation,
dans lequel la sonde de température est en contact avec le support arrière (104) et avec le régulateur à CI (113) de sorte que la température du liquide de refroidissement circulant à travers une portion près du côté de l'orifice de sortie du canal de liquide de refroidissement (114) peut être détectée.

7. L'alternateur de la revendication 4, comprenant une borne permettant d'envoyer un signal de température à une unité de contrôle électronique d'un moteur.
